# EUROPEAN PATENT APPLICATION

(11) **EP 3 444 606 A1**
(43) Date of publication of application: **20.02.2019**
(21) Application number: 16898617.2
(22) Date of filing: 13.04.2016
(51) Int. Cl.: G01N 30/24, G01N 1/00, G01N 35/04, G01N 35/10

(54) **AUTOSAMPLER**

(71) Applicant: Shimadzu Corporation, Kyoto 604-8511 (JP)
(72) Inventor: HIRAMATSU Yoshiro, Kyoto-shi Kyoto 604-8511 (JP)
(74) Representative: Mewburn Ellis LLP
(86) International application number: PCT/JP2016/061929
(87) International publication number: WO 2017/179157

(57) **Abstract**

An autosampler includes a drive unit, an obstacle sensor, and a control unit. The drive unit includes: a head; an arm that extends in a Y-axis direction, which is one direction in a horizontal plane, and slides in a Y-axis direction while holding the head on the distal end side; and an arm movement mechanism that moves the arm in an X-axis direction that is orthogonal to the Y-axis direction in the horizontal plane. The obstacle sensor is provided to the drive unit and detects an obstacle on the movement path of the head and the arm. The control unit controls driving of the head by the drive unit and includes a shortest route movement route and an obstacle avoidance unit.

## Description

### Field

The present invention relates to an autosampler, which is used in liquid chromatograph and gas chromatograph, for example, and which drives within a horizontal plane a head, the head having a function that enables, with a needle thereon, suction and discharge of a sample or a reagent, to automatically access a container or an injection port each disposed within a moving range of the head.

### Background

An autosampler that is used for liquid chromatograph (LC) or gas chromatograph (GC), and liquid chromatography-mass spectrometer (LC-MS) or gas chromatography-mass spectrometer (GC-MS) obtained by connecting a mass spectrometer (MS) to the LC or the GC drives a head of the autosampler in two directions orthogonally intersecting with each other within a horizontal plane. The head has a function that enables, with a needle thereon, suction and discharge of a sample, a reagent, or the like. A sample container, a reagent container, a sample injection port, and the like are disposed within the moving range of the head.

A user catalogues in (teaches) an apparatus side a position of a sample container or the like disposed within the moving range of the head, so that the autosampler automatically executes operation, such as preparing a sample and injecting a prepared sample to the chromatograph, based on a spectrometry item defined by the user.

### Summary

### Technical Problem

The above-described autosampler can work together with another apparatus such as an autoinjector and a detector. Specifically, within the moving range of the head of the autosampler, another apparatus such as an autoinjector or a detector can be disposed, and in some cases, a prepared sample can be introduced into the autoinjector or the detector.

However, there occurs a case that the other apparatus such as the autoinjector or the detector disposed within the moving range of the head becomes an obstacle that interferes with the head or an arm to move the head, and thereby prevents the movement of the head that is to move to a next operation position at which a sample is prepared or a sample is injected. Accordingly, when such problem occurs, the user needs to move such obstacle to the outside of the moving range of the head.

Moreover, to prevent the above-described problem, a movement path of the head may have to be specified so that the head can always move along such path that the problem will most unlikely occur. As a result, a moving distance of the head unnecessarily increases even though there is no obstacle within the moving range of the head, and thus, a moving time of the head increases.

An object of the present invention is to provide an autosampler capable of preventing a head and an arm from contacting an obstacle without increasing a time required for the head to move.

### Solution to Problem

An autosampler according to the present invention includes a drive unit, an obstacle sensor, and a control unit. The drive unit includes: a head; an arm that extends in a Y-axis direction, which is one direction in a horizontal plane, and slides in a Y-axis direction while holding the head on the distal end side; and an arm movement mechanism that moves the arm in an X-axis direction that is orthogonal to the Y-axis direction in the horizontal plane. The obstacle sensor is provided to the drive unit and detects an obstacle on the movement path of the head and the arm. The control unit controls driving of the head by the drive unit and includes a shortest route movement route and an obstacle avoidance unit.

The shortest route movement unit of the control unit is configured to drive the drive unit in such a way that the head moves along a shortest route to a destination of the head after the destination of the head is set. The obstacle avoidance unit is configured to execute a Y-axis direction avoidance operation and an X-axis direction avoidance operation. The Y-axis direction avoidance operation is an operation to, when the head is being moved along the shortest route and the obstacle sensor detects an obstacle, stop the movement of the arm in the X-axis direction, and perform a Y-axis direction avoidance operation to move the arm only in the Y-axis direction such that the head comes to a position on the Y-axis from which the arm is advanced in the X-axis direction without causing the head and the arm to contact the obstacle. The X-axis direction avoidance operation is an operation in which, after the Y-axis direction avoidance operation, the arm is advanced only in the X-axis direction to a position at which the head is able to be linearly moved to the destination direction. The shortest route movement unit is configured to drive the drive unit in such a way that the head moves along the shortest route from a position right after the X-axis direction avoidance operation has completed to the destination.

There may be some cases in which, according to an initial position of the head, a destination position, or an obstacle position, by simply executing the above Y-axis direction avoidance operation, thereafter the head becomes able to be linearly moved to the destination. In this case, completion of the Y-axis direction avoidance operation simultaneously means completion of the X-axis direction avoidance operation.

There may be some cases in which, according to a position where an obstacle is disposed, motion of the head to prevent the head and the arm from contacting the obstacle, when the head is moving to the destination, is physically impossible. In such cases, the head cannot be moved to the destination unless the obstacle is displaced. In the present invention, it is preferable that the control unit further includes a warning generation unit that warns a user when it is physically impossible to perform the Y-axis direction avoidance operation. This warning enables the user to know early that the obstacle needs to be moved from the current position.

Moreover, it is preferable that the control unit further includes an avoidance position storage unit that stores therein the position of the head right after the Y-axis direction avoidance operation has completed, as a Y-axis direction avoidance position, and the position of the head right after the X-axis direction avoidance operation has completed, as an X-axis direction avoidance position, and the shortest route movement unit be configured to control the drive unit in such a way that when the head is being moved to the destination with the Y-axis direction avoidance position and the X-axis direction avoidance position stored in the avoidance position storage unit, the head moves along the shortest route to the destination via the Y-axis direction avoidance position and the X-axis direction avoidance position. Consequently, for the second movement to the destination and after, the autosampler can move the head along the shortest route to the destination while avoiding the obstacle with the Y-axis direction avoidance position and the X-axis direction avoidance position stored in the avoidance position storage unit without executing the Y-axis direction avoidance operation and the X-axis direction avoidance operation that each use the obstacle sensor.

### Advantageous Effects of Invention

The autosampler according to the present invention is configured in such a way that the control unit that controls the driving of the head with the drive unit includes a shortest route movement unit and an obstacle avoidance unit; the obstacle avoidance unit executes a Y-axis direction avoidance operation and an X-axis direction avoidance operation; the shortest route movement unit drives the drive unit in such a way that the head moves along the shortest route from a position right after the X-axis direction avoidance operation has completed to a destination, in such a way that the autosampler can prevent the head and the arm from contacting an obstacle without moving the head along a movement path longer than necessary.

### Brief Description of Drawings

Fig. 1 is a schematic plan view illustrating an embodiment of an autosampler.
Fig. 2 is a flowchart that indicates an obstacle avoidance operation of the embodiment.
Fig. 3 is a flowchart that indicates movement of a head during normal operation in the embodiment.
Fig. 4 is a plan view illustrating a state during obstacle avoidance operation in the embodiment.
Fig. 5 is a plan view illustrating a next state of the operation in Fig. 4.
Fig. 6 is a plan view illustrating a next state of the operation in Fig. 5.
Fig. 7 is a plan view illustrating a next state of the operation in Fig. 6.
Fig. 8 is a plan view schematically illustrating movement during normal operation in the embodiment.
Fig. 9 is a plan view illustrating an example of an error in the embodiment.
Fig. 10 is a plan view illustrating another example of an error in the embodiment.

### Description of Embodiments

The following describes an embodiment of the autosampler of the present invention using drawings.

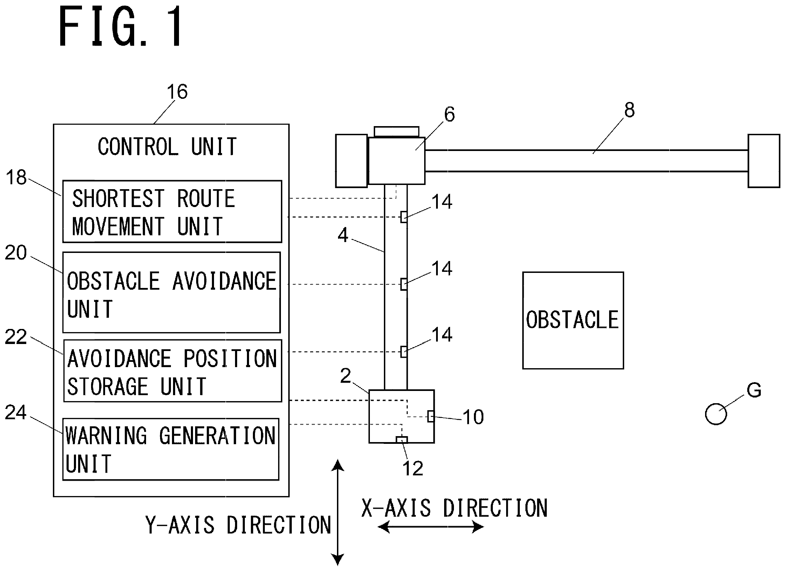

First, a configuration of the embodiment of the autosampler is described with reference to Fig. 1.

A head 2 is mounted on an end of an arm 4. The head 2 holds, for example, a needle having a distal end facing perpendicularly downward, to suck and discharge a liquid from the distal end of the needle. The arm 4 is arranged so as to extend in the Y-axis direction, which is one direction within a horizontal plane (a vertical direction in Fig. 1). The arm 4 is held by an arm movement mechanism 6. The arm movement mechanism 6 can move in the X-axis direction along a guide rail 8 arranged so as to extend in the X-axis direction orthogonal to the Y-axis direction within a horizontal plane (a horizontal direction in Fig. 1). The arm movement mechanism 6 allows the arm 4 to slide in the Y-axis direction. The head 2, the arm 4, and the arm movement mechanism 6 may constitute a drive unit in claim 1 of the present invention.

Hereinafter, a rightward direction and a leftward direction in the X-axis direction are defined as a plus direction and a minus direction, respectively, and an upward direction and a downward direction of the Y-axis direction are defined as a plus direction and a minus direction, respectively.

Examples of a mechanism allowing the arm movement mechanism 6 to move along the guide rail 8 in the X-axis direction include a mechanism (not illustrated) constituted of a rack gear provided so as to extend along the guide rail 8 in the X-axis direction and a pinion gear provided to the arm movement mechanism 6 and engaged with the rack gear. The pinion gear provided to the arm movement mechanism 6 is rotated by a stepping motor, and a position of the head 4 can be controlled in the X-axis direction by changing the number of revolutions of the stepping motor.

Examples of a mechanism allowing the arm movement mechanism 6 to slide the arm 4 in the Y-axis direction include a mechanism (not illustrated) constituted of a rack gear that is extended in the Y-axis direction and provided along the arm 4, and a pinion gear that is provided to the arm movement mechanism 6 and engaged with the rack gear of the arm 4. The pinion gear provided to the arm movement mechanism 6 is rotated by a stepping motor, and a position of the head 4 can be controlled in the Y-axis direction by changing the number of revolutions of the stepping motor.

The head 2 includes an obstacle sensor 10 on a lateral side of the X-axis direction plus side thereof (right side in Fig. 1) and an obstacle sensor 12 on a lateral side of the Y-axis direction plus side (lower side in Fig. 1). The arm 4 includes a plurality of obstacle sensors 14 on a plurality of positions (three positions in Fig. 1) of a lateral side of the X-axis direction plus side (right side in Fig. 1). These obstacle sensors 10, 12, and 14 each detect the presence of an obstacle that approaches within a certain distance in a direction that each sensor faces (X-axis direction plus side or Y-axis direction plus side). For the obstacle sensors 10, 12, and 14, a photomicro sensor, an area sensor, a photoelectric sensor, a proximity sensor, and a laser sensor can be used, for example. A detection distance of each of the obstacle sensors 10, 12, and 14 is approximately 10 mm.

Movement of the head 2, that is, operation of the arm movement mechanism 6 is controlled by the control unit 16. The control unit 16 includes, as functions to move the head 2 to a destination G, a shortest route movement unit 18, an obstacle avoidance unit 20, an avoidance position storage unit 22, and a warning generation unit 24. A detection signal output from each of the obstacle sensors 10, 12, and 14 is received by the control unit 16. The control unit 16 controls the operation of the arm movement mechanism 6, based on a signal from each of the obstacle sensors 10, 12, and 14 to prevent the head 2 and the arm 4 from contacting an obstacle.

The control unit 16 can be implemented with a computer dedicated to this autosampler or a general-purpose personal computer. The shortest route movement unit 18, the obstacle avoidance unit 20, and the warning generation unit 24 provide functions that are implemented through a program stored in the computer that constitutes the control unit 16 when the program is executed by an arithmetic processing unit. The avoidance position storage unit 22 is implemented with a storage device included in the control unit 16. The avoidance position storage unit 22 may be implemented with a storage device provided independently of the control unit 16.

The shortest route movement unit 18 is configured to calculate a shortest route along which the head 2 is moved to the destination G and to control the arm movement mechanism 6 in such a way that the head 2 moves along the shortest route. Furthermore, the shortest route movement unit 18 is configured to calculate, when an X-axis direction avoidance position and a Y-axis direction avoidance position, which will be described later, are stored in the avoidance position storage unit 22, a shortest route along which the head 2 is moved to a destination via the above-described avoidance positions, and to control the arm movement mechanism 6 in such a way that the head 2 moves along the shortest route.

The obstacle avoidance unit 20 is configured to control the arm movement mechanism 6, when an obstacle is present on a movement path of the head 2 or the arm 4, in such a way that the head 2 and the arm 4 avoid the obstacle. Details of obstacle avoidance operation to avoid an obstacle will be described later. Examples of the obstacle avoidance operation mainly include an X-axis direction avoidance operation and a Y-axis direction avoidance operation, and to provide an X-axis direction avoidance position and a Y-axis direction avoidance position to avoid the obstacle based on each avoidance operation.

The obstacle avoidance operation may always be performed during normal operation, but preferably be performed during teaching to catalogue the destination G and a position of an obstacle in the control unit 16. During teaching, with the X-axis direction avoidance operation and the Y-axis direction avoidance operation, the X-axis direction avoidance position and the Y-axis direction avoidance position are acquired to be stored in the avoidance position storage unit 22. This teaching enables the shortest route movement unit 18 to move the head 2, during normal operation, along the shortest route via the X-axis direction avoidance operation and the Y-axis direction avoidance operation.

The warning generation unit 24 is configured to warn a user when the head 2 and the arm 4 cannot avoid an obstacle even with the above-described obstacle avoidance operation. Warning to the user may be given in a form of an error displayed on a monitor of a liquid crystal display connected to the control unit 16 or in a form of outputting a warning tone.

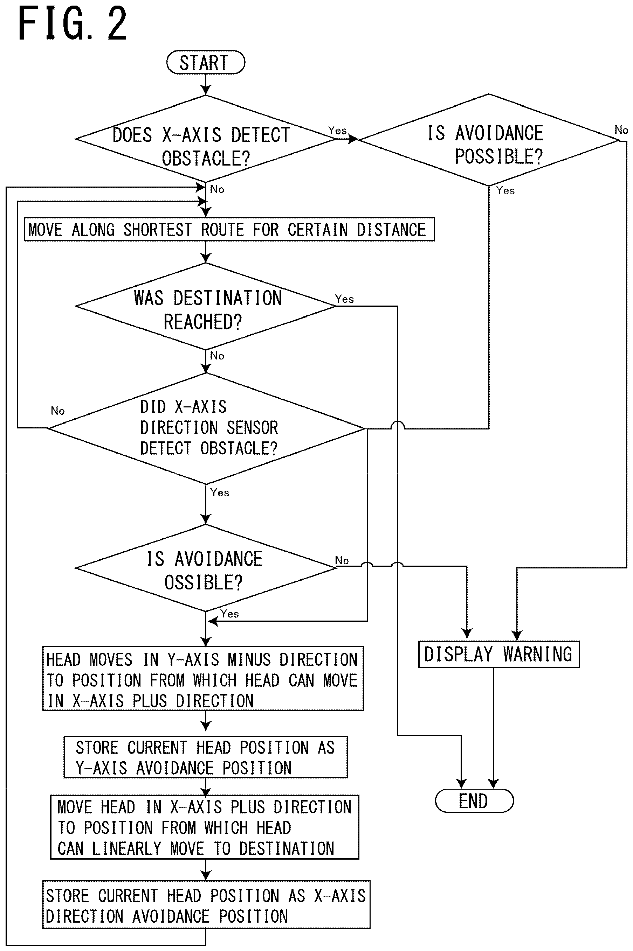

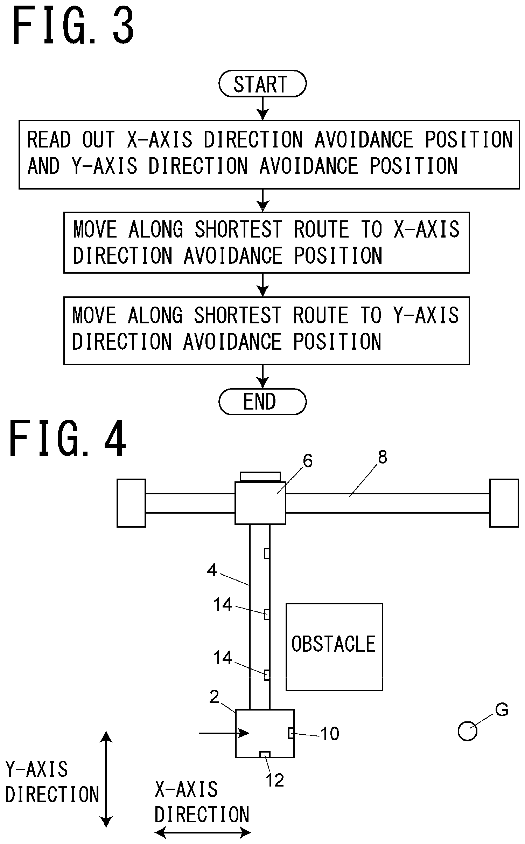

Next, with reference to the flowchart in Fig. 2, and the drawings in Fig. 3 to Fig. 7 and Fig. 10, the obstacle avoidance operation is described. It should be noted that the obstacle avoidance operation described below is an operation performed during teaching to determine a path along which the head is moved from a predetermined reference position to the destination G. In this embodiment, a position of the head 2 indicated in Fig. 1 is a reference position of the head 2. In the following description, the obstacle sensors 10 and 14 are defined as an "X-axis direction sensors" that detect the presence of an obstacle within a certain distance from the head 2 and the arm 4 in the X-axis plus direction, and the obstacle sensor 12 is defined as a "Y-axis direction sensor" that detects the presence of an obstacle within a certain distance from the head 2 in the Y-axis plus direction.

In principle, the head 2 is to linearly move, that is, along the shortest route to the destination G. With the head 2 in the reference position, when the X-axis direction sensors 10 and 14 detect no obstacle, the head 2 moves along the shortest route to the destination G. When an obstacle that the head 2 or the arm 4 contacts is not present between the head 2 and the destination G, the head 2 moves along the shortest route to reach the destination G.

However, as illustrated in Fig. 4, while the head 2 is moving along the shortest route, if at least one of the X-axis direction sensors 10 and 14 detects an obstacle, the operation of the arm 4 is stopped. Then, whether the head 2 and the arm 4 can avoid the obstacle is determined. Whether the avoidance is possible is normally determined by determining whether "Y-axis direction avoidance operation" or "X-axis direction avoidance operation", which will be described later, is executable.

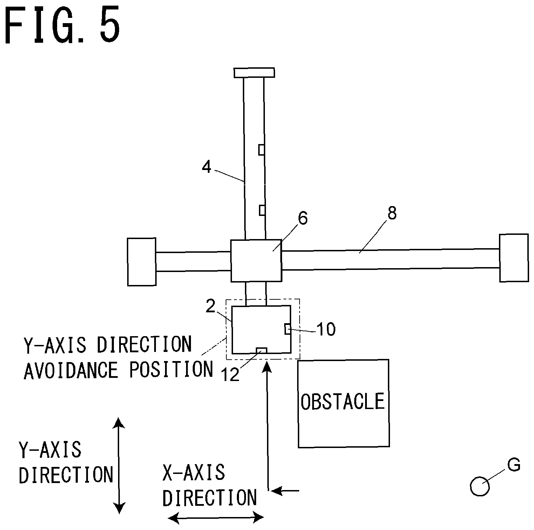

When the avoidance is possible, as illustrated in Fig. 5, the head 2 is moved in the Y-axis minus direction to a position from which the head 2 can move in the X-axis plus direction. A position from which the head 2 can be moved in the X-axis plus direction can be recognized based on a detection signal of the X-axis direction sensor 10. Specifically, this is a position obtained by, considering the size of the head 2, further moving the head 2 in the Y-axis minus direction for a certain distance after the X-axis direction sensor 10 detects no obstacle. The operation to move the head 2 to such position is a "Y-axis direction avoidance operation". The position of the head 2 right after this Y-axis direction avoidance operation has completed is stored in the avoidance position storage unit 22, as the "Y-axis direction avoidance position".

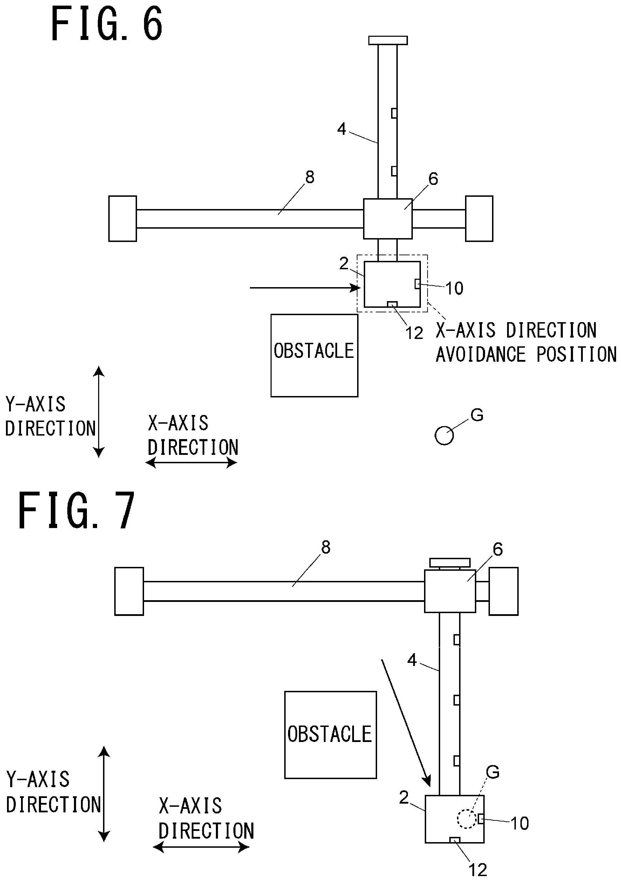

After the Y-axis direction avoidance operation has completed, when an obstacle is present on a straight line between the "Y-axis direction avoidance position" right after the Y-axis direction avoidance operation has completed and the destination G, as illustrated in Fig. 6, the head 2 is moved in the X-axis plus direction to a position from which the head 2 can linearly move to the destination G. This operation is an X-axis direction avoidance operation. The position of the head 2 right after the X-axis direction avoidance operation has completed is stored in the avoidance position storage unit 22 as the "X-axis direction avoidance position".

The following describes the X-axis direction avoidance operation more specifically. When the head 2 is moved in the X-axis plus direction from the "Y-axis direction avoidance position", the Y-axis direction sensor 12 detects the obstacle. When the head 2 is further moved in the X-axis plus direction, the Y-axis direction sensor 12 detects no obstacle. The "X-axis direction avoidance position" is a position of the head 2 obtained by, considering the size of the head 2, further moving the head 2 in the X-axis plus direction for a certain distance after the Y-axis direction sensor 12 detects no obstacle.

In should be noted that, after the Y-axis direction avoidance operation has completed, when an obstacle is not present on a straight line between the "Y-axis direction avoidance position" right after the Y-axis direction avoidance operation has completed and the destination G, the head 2 is able to be linearly moved from the "Y-axis direction avoidance position" to the destination G, and thus, the above-described X-axis avoidance operation need not be performed. In this case, the Y-axis direction avoidance operation and the X-axis direction avoidance operation are completed simultaneously.

After the X-axis direction avoidance operation has completed, the head 2 is linearly moved from the "X-axis direction avoidance position" to the destination G, as illustrated in Fig. 7. This completes searching for the shortest route from the reference position to the destination G with the obstacle avoided.

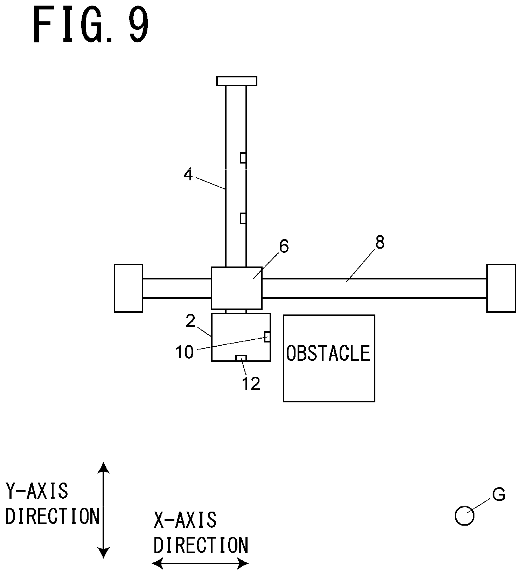

When the X-axis direction sensors 10 and 14 detect an obstacle and the head 2 and the arm 4 cannot avoid the obstacle, a warning is displayed. As illustrated in Fig. 9, when an obstacle is disposed near the guide rail 8, even if it is tried to perform the "Y-axis direction avoidance operation", it is physically impossible to move the head 2 in the Y-axis minus direction to a position from which the head 2 can move in the X-axis direction. This means the head 2 and the arm 4 cannot avoid the obstacle. In this case, the warning generation unit outputs a warning to prompt the user to displace the obstacle.

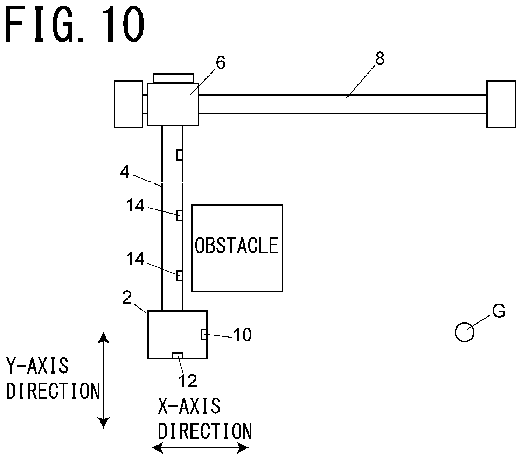

Moreover, as illustrated in Fig. 10, with the X-axis direction sensor 14 detecting an obstacle at the time of starting teaching, when the head 2 is moved in the Y-axis minus direction (upward direction in Fig. 10), the head 2 contacts the obstacle. However, because the head 2 cannot be further moved in the X-axis minus direction (leftward in Fig. 10), it is physically impossible for the head 2 to avoid the obstacle. Thus, the warning generation unit displays (or outputs) a warning to the user.

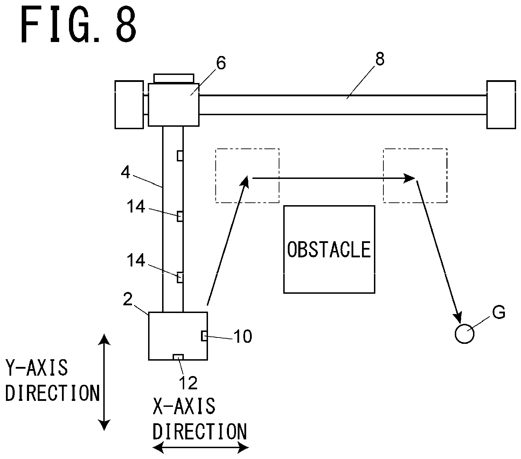

Once the X-axis direction avoidance position and the Y-axis direction avoidance position are stored in the avoidance position storage unit 22 (Fig. 1) with the above-described obstacle avoidance operation, as illustrated in the flowchart in Fig. 3 and the diagram in Fig. 8, the head 2 can be moved along the shortest route to the destination G via the X-axis direction avoidance position and the Y-axis direction avoidance position. Specifically, first the head 2 is linearly moved from the current position to the Y-axis direction avoidance position, and then moved to the Y-axis direction avoidance position. Thereafter, the head 2 is linearly moved from the Y-axis direction avoidance position to the destination G. The autosampler thus can move the head 2, which may be at any desired position, along the shortest route to the destination G while securely preventing the head 2 and the arm 4 from contacting the obstacle.

There may be some cases in which, according to a current position of the head 2, the head 2 can be linearly moved from the current position to the destination G without passing through the X-axis direction avoidance position and the Y-axis direction avoidance position. Thus, when moving the head 2, the autosampler is preferably configured to cause the control unit 16 to determine whether the head 2 passes through the X-axis direction avoidance position and the Y-axis direction avoidance position, based on the coordinate of a current position of the head 2, the coordinate of a destination G, and the coordinates of an X-axis direction avoidance position and a Y-axis direction avoidance position.

### Reference Signs List

- 2: Head
- 4: Arm
- 6: Arm movement mechanism
- 8: Guide rail
- 10, 12, 14: Obstacle sensors
- 16: Control unit
- 18: Shortest route movement unit
- 20: Obstacle avoidance unit
- 22: Avoidance position storage unit
- 24: Warning generation unit

## Claims

1. An autosampler comprising:
a drive unit including
a head,
an arm that extends in a Y-axis direction, which is one direction in a horizontal plane, and slides in the Y-axis direction while holding the head on the distal end side, and
an arm movement mechanism that moves the arm in an X-axis direction that is orthogonal to the Y-axis direction in the horizontal plane;
an obstacle sensor that is provided to the drive unit and detects an obstacle on the movement path of the head and the arm; and
a control unit that controls operation of the drive unit based on a signal from the obstacle sensor, the control unit including
a shortest route movement unit configured to drive the drive unit in such a way that the head moves along a shortest route to a destination of the head after the destination of the head is set, and
an obstacle avoidance unit configured to, when the head is being moved along the shortest route and the obstacle sensor detects an obstacle, stop the movement of the arm in the X-axis direction, perform a Y-axis direction avoidance operation to move the arm only in the Y-axis direction in such a way that the head comes to a position on the Y-axis from which the arm is advanced in the X-axis direction without causing the head and the arm to contact the obstacle, and to execute an X-axis direction avoidance operation after the Y-axis direction avoidance operation, in which the arm is advanced only in the X-axis direction to a position from which the head is able to be linearly moved to the destination direction, wherein
the shortest route movement unit is configured to drive the drive unit in such a way that the head moves along the shortest route from a position right after the X-axis direction avoidance operation has completed to the destination.

2. The autosampler according to claim 1, wherein the control unit further includes a warning generation unit that warns a user when it is physically impossible to perform the Y-axis direction avoidance operation.

3. The autosampler according to claim 1 further including an avoidance position storage unit that stores therein the position of the head right after the Y-axis direction avoidance operation has completed, as a Y-axis direction avoidance position, and the position of the head right after the X-axis direction avoidance operation has completed, as an X-axis direction avoidance position, wherein
the shortest route movement unit is configured to control the drive unit in such a way that when the head is moved to the destination with the Y-axis direction avoidance position and the X-axis direction avoidance position stored in the avoidance position storage unit, the head moves along the shortest route to the destination via the Y-axis direction avoidance position and the X-axis direction avoidance position.
